(19) Europäisches Patentamt
European Patent Office
Office européen des brevets

(11) **EP 2 487 966 B1**

(12) **EUROPEAN PATENT SPECIFICATION**

(45) Date of publication and mention
of the grant of the patent:
**06.11.2013 Bulletin 2013/45**

(51) Int Cl.:
*H04W 52/24* (2009.01)    *H04W 52/36* (2009.01)
*H04W 84/10* (2009.01)

(21) Application number: **11153564.7**

(22) Date of filing: **07.02.2011**

(54) **Method and a device for setting a maximum value of a transmission power of the signals transferred by a home base station**

Verfahren und Vorrichtung zum Einstellen eines maximalen Wertes einer Übertragungsleistung von Signalen, die von einer Heimbasisstation übertragen werden

Procédé et dispositif pour le réglage d'une valeur maximale d'une puissance de transmission de signaux transférés par une station de base domestique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.08.2012 Bulletin 2012/33**

(73) Proprietors:
• **Mitsubishi Electric R&D Centre Europe B.V.**
**1119 NS Schiphol Rijk (NL)**
Designated Contracting States:
**FR**
• **Mitsubishi Electric Corporation**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **Brunel, Loïc**
**35708, RENNES Cedex 7 (FR)**
• **Gresset, Nicolas**
**35708, RENNES Cedex 7 (FR)**
• **Guillet, Julien**
**35708, RENNES Cedex 7 (FR)**

(74) Representative: **Maillet, Alain**
**Cabinet Le Guen Maillet**
**5, place Newquay**
**B.P. 70250**
**35802 Dinard Cedex (FR)**

(56) References cited:
**US-A1- 2009 042 593**

• **HOLGER CLAUSSEN ED - ANONYMOUS: "Performance of Macro and Co-Channel Femtocells in a Hierarchical Cell Structure", IEEE INTERNATIONAL SYMPOSIUM ON PERSONAL, INDOOR AND MOBILE RADIO COMMUNICATIONS. PIMRC, IEEE; PI, XX, 1 September 2007 (2007-09-01), pages 1-5, XP031168593, ISBN: 978-1-4244-1143-6**
• **NEW POSTCOM: "Downlink power setting for ICIC in macro-femto co-channel deployment", 3GPP DRAFT; R1-104423_DOWNLINK POWER SETTING FOR ICIC IN MACRO-FEMTO CO-CHANNEL DEPLOYMENT_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Madrid, Spain; 20100823, 17 August 2010 (2010-08-17), XP050449754, [retrieved on 2010-08-17]**

## Description

The present invention relates generally to a method and a device for setting a maximum value of a transmission power of the signals transferred by a home base station through a wireless interface.

Wireless cellular telecommunication networks are largely deployed but there are still some areas not covered by the base stations of the wireless cellular telecommunication network. The base stations are deployed by an operator according to a given planning.

For example, the access to the wireless cellular telecommunication network might not be possible or might require a too high transmission power or a too low spectral efficiency, i.e., too many system resources for a mobile terminal located in a building, if the signals radiated by the base stations and/or by the mobile terminal are too attenuated.

Solutions are proposed today. Particular base stations which are not necessarily deployed by operator and thus not following a given planning, like home base stations or femto base stations or pico base stations or relays, may provide coverage areas within the buildings and base station offload. Relays may also provide outdoor coverage extension.

The home base stations or femto base stations provide a limited coverage area. Due to the constant coverage area size reduction and spectral efficiency increase, inter-cell interference became a main issue.

These home base stations may strongly interfere with the base station, or even create coverage holes, or the power of home base stations may be set, in order to avoid that the home base stations signals interfere too much with base stations signals, to a transmission power value that is too low for serving, in good link conditions, mobile terminals.

Without shadowing, the interference impact depends on the distance separating the base station and the home base station. In the downlink channel, the higher the distance between base station and home base station is, the smaller the transmission power value of the home base station should be, the lower the distance between base station and home base station is, the higher the transmission power value of the home base station should be.

The home base stations may enable a limited number of mobile terminals to access the wireless cellular telecommunication network through their respective resources. The mobile terminals allowed to access the resources of the network through the home base station may be determined by the owner of the home base station, the network or a combination of both.

The owner must be understood here in the general sense: the owner may only be the main user of the home base station, the owner may be the person who rents the home base station or the owner may be the person who accommodates the home base station in his house or office.

For example, only mobile terminals of the owner of the home base station and his family can access the wireless cellular telecommunication network through the home base station. These mobile terminals are associated with the home base station.

Base stations enable a large number of mobile terminals to access the wireless cellular telecommunication network through their respective resources. The mobile terminals allowed to access the resources of the network through the base station may be determined by the operator of the wireless cellular telecommunication network.

The cell of a base station is usually much larger than a cell of a home base station which is generally located within a building.

The paper of Holger C entitled "Performance of macro an co-channel femtocells in hierarchical cell structure" published in IEEE PIMRC'07 discloses power adaptation considering all penetration.

The patent application US 2009/042593 discloses a method of adaptation of transmit power for neighbouring nodes.

The present invention aims at avoiding that signals transferred between home base stations and mobile terminals served by the home base stations interfere significantly on signals transferred between base stations and mobile terminals served by the base stations.

To that end, the present invention concerns a method for setting a maximum value of a transmission power of the signals transferred by a home base station through a wireless interface, the home base station being located in a building located in the cell of a base station, characterised in that the method comprises the steps of:

- obtaining, by the home base station, the power value of received radio signals transferred by the base station which serves at least one mobile terminal located in the vicinity of the home base station,
- setting, by the home base station, the maximum value of the transmission power of the signals transferred by the home base station according to the obtained power value of received radio signals transferred by the base station taking into account a wall penetration factor of the building and aiming at making the worst signal to interference plus noise ratio of a mobile terminal served by base station and located in the vicinity of the home base station equal to the worst signal to interference plus noise ratio of a mobile terminal served by the home base station.

The present invention concerns also a device for setting a maximum value of a transmission power of the signals transferred by a home base station through a wireless interface, the home base station being located in a building located in the cell of a base station, characterised in that the device comprises:

- means for obtaining the power value of received radio signals transferred by the base station which serves at least one mobile terminal located in the vicinity of the home base station,
- means for setting the maximum value of the transmission power of the signals transferred by the home base station according to the obtained power value of received radio signals transferred by the base station taking into account a wall penetration factor of the building and aiming at making the worst signal to interference plus noise ratio of a mobile terminal served by base station and located in the vicinity of the home base station equal to the worst signal to interference plus noise ratio of a mobile terminal served by the home base station.

Thus, there is a fair balance between the throughput served at the home base station cell-edge and the throughput served at the base station cell-edge around the home base station. By doing this, neither the base station throughput nor the home base station throughput is prioritised.

According to a particular feature, the home base station:

- obtains the power value of received radio signals transferred by at least another base station and/or another home base station which does not serve the at least one mobile terminal located in the vicinity of the home base station,
- obtains the noise level of at least one mobile terminal served by the home base station,

and the maximum transmission power value of signals transferred by the home base station is set according to the noise level and the power value of received radio signals transferred by at least another base station and/or another home base station which does not serve the at least one mobile terminal located in the vicinity of the home base station.

Thus, since the level of noise and inter-cell interference arising from signals transmission from other base stations and/or other home base stations different from the home base station on a mobile terminal in the vicinity of the home base station is taken into account, the maximum transmission power value of the home base station is set according to its real impact on the mobile terminal performance. Indeed, if the inter-cell interference or the noise level is already high without home base station transmission, its impact on mobile terminal performance may be negligible and higher home base station transmission power value may be applied.

According to a particular feature, the maximum transmission power value of signals transferred by the home base station is set aiming at having the worst signal to interference plus noise ratio of a mobile terminal served by the home base station

$$SINR_{1F,CE} = \frac{\sqrt{4a^2\phi(\phi+1)+\left(\frac{\eta+a}{\eta+1}\right)^2} - \frac{\eta+a}{\eta+1}}{2a^2(\phi+1)}.$$

where $\phi = P_{M,i} / (aP_i + N)$ is the signal to interference plus noise ration for a mobile terminal served by the base station and located in the building when the home base station HBS is shut down, $a$ is the wall penetration factor, $P_i$ is the power value of received radio signals transferred by at least another base station and/or another home base station which does not serve the at least one mobile terminal located in the vicinity of the home base station, $N$ is the noise level at the mobile terminal MT and $\eta = aP_i/N$.

Thus, with this formula, there is a practical solution for setting the maximum home base station transmission power value and aiming at having the worst signal interference plus noise ratio $SINR_{1F,CE}$ of the mobile terminal served by base station and located in the vicinity of the home base station equal to the worst signal interference plus noise ratio of a mobile terminal served by the home base station.

According to a particular feature, the maximum transmission power value of signals transferred by the home base station is set according to a transmission power aiming at having the worst signal to interference plus noise ratio for a mobile terminal served by the base station degraded by a given degradation factor compared to a transmission without interference from the home base station.

Thus, the base station degradation through home base station transmission is controlled and kept below a certain level, which is assumed to be tolerable by the operator and its customers.

According to a particular feature, the maximum transmission power value of signals transferred by the home base station aims at having the worst signal to interference plus noise ratio of a mobile terminal served by the home base station

$$SINR_{2F,CE} = \frac{1}{a^2(\phi+1)}\left(\frac{1}{\rho}-1\right)\frac{\eta+a}{\eta+1}$$

where $\rho$ is the degradation factor.

According to a particular feature, the maximum transmission power value of signals transferred by the home base station is set aiming at having the worst signal to interference plus noise ratio of a mobile terminal served bv the home base station

$$SINR_{F,CE} = \frac{1}{a^2(\phi+1)}\left(\frac{1}{\rho}-1\right)\frac{\eta+a}{\eta+1} + \frac{\sqrt{4a^2\phi(\phi+1)+\left(\frac{\eta+a}{\eta+1}\right)^2} - \frac{\eta+a}{\eta+1}}{2a^2(\phi+1)}.$$

Thus, with this formula, there is a practical solution for setting the home base station maximum transmission power value and aiming at having the worst signal interference plus noise ratio of the mobile terminal served by base station and located in the vicinity of the home base station set according to a transmission power aiming at having the worst signal to interference plus noise ratio for a mobile terminal served by the base station degraded by a degradation factor compared to a transmission without interference from the home base station.

According to a particular feature, the maximum transmission power value of signals transferred by the home base station is set using a table, the obtained power value of received radio signals transferred by the base station being an entry of the table providing a maximum transmission power value which is shifted by a function which depends on the wall penetration factor and a predetermined factor.

Thus, the operator can provide a suitable table to home base stations through the network and easily update the power setting rule of the home base stations by changing the table.

The entries of the table allow adaptation of the maximum transmission power value of each home base station according to its environment. The maximum transmission power value can be shifted according to parameters which are not included in the table entries but still impact the choice of the transmission power value.

By doing this, the maximum transmission power value is more appropriately set taking into account parameters which were not initially part of the table design, like the wall penetration factor and the predetermined factor. Thus, the table remains simple, with a low number of entries.

According to a particular feature, the home base station:

- obtains the power value of received radio signals transferred by at least another base station and/or another home base station which does not serve at least one mobile terminal located in the vicinity of the home base station,
- obtains the noise level of at least one mobile terminal served by the home base station,

and the maximum transmission power value of signals transferred by the home base station is set using a table, the obtained power values of received radio signals, the wall penetration factor of the building and the noise level being entries of the table.

Thus, the table includes more parameters entries of the table and the operator can better control the maximum transmission power setting.

According to a particular feature, the home base station:

- obtains the power value of received radio signals transferred by at least another base station and/or another home base station which does not serve at least one mobile terminal located in the vicinity of the home base station,
- obtains the noise level of at least one mobile terminal served by the home base station,
- obtains the lowest path gain in the building between the home base station and a mobile terminal served by the home base station,

and the maximum transmission power value of signals transferred by the home base station is set using a table, the obtained power values of received radio signals, the lowest path gain, the wall penetration factor of the building and the noise level being entries of the table.

Thus, the table includes more parameters entries of the table and the operator can better control the transmission power setting.

According to a particular feature, the home base station :

- transfers a message through the wireless interface using a first protocol of communication wherein signals are transferred in a first frequency band, the message requesting at least one mobile terminal to perform some measurements on a second frequency band on which signals of a second protocol of communication are transferred,
- receives, through the wireless interface and using the first protocol of communication, measurements performed by the at least one mobile terminal,
- obtains for the second frequency band, the lowest path gain in the building between the home base station and the mobile terminal served by the home base station and a wall penetration factor,
- set the maximum value of the transmission power of the signals transferred by the home base station in the second frequency band according to the measurements, the wall penetration factor and the lowest path gain.

Thus, a home base station, like an hybrid home base station being able to operate on two frequency bands, using for example a 3GPP LTE (third Generation Partnership Project Long Term Evolution) protocol on the first frequency band and using for example a 3GPP UMTS (Universal Mobile Telecommunications System) or 3GPP HSPA (High Speed Packet Access) protocol on the second frequency band, can take advantage of these capabilities to appropriately set its maximum transmission power value. Since in 3GPP LTE the home base station is able to initiate inter-RAT measurements (measurements on downlink channels belonging to another Radio Access Technology), i.e., to ask a mobile terminal to perform measurements on the 3GPP UMTS/HSPA frequency band, and is able, unlike in 3GPP UMTS and 3GPP HSPA, to process the mobile terminal measurements, it can take benefit from this knowledge to choose the appropriate maximum transmission power value on the second frequency band.

According to a particular feature, the home base station :

- transfers a message through the wireless interface and using a first protocol of communication wherein signals are transferred in a first frequency band, the message requesting at least one mobile terminal to perform some measurements on the first frequency band,
- receives, through the wireless interface and using the first protocol of communication, measurements performed by the at least one mobile terminal,
- obtains for the first frequency band, the lowest path gain in the building between the home base station and the mobile terminal served by the home base station and a wall penetration factor,
- transposes in a second frequency band, the lowest path gain in the building between the home base station and the mobile terminal served by the home base station and the wall penetration factor,
- set the maximum value of the transmission power of signals transferred by the home base station in the second frequency band according to the measurements, the transposed wall penetration factor and the lowest path gain.

Thus, a home base station, like an hybrid home base station being able to operate on two frequency bands, using for example a 3GPP LTE protocol on the first frequency band and using for example a 3GPP UMTS or 3GPP HSPA protocol on the second frequency band, can take advantage of these capabilities to appropriately set its transmission power. Since in 3GPP LTE, the home base station is able, unlike in 3GPP UMTS and 3GPP HSPA, to process the mobile terminal measurements, it can take benefit from this knowledge to choose the appropriate maximum transmission power value on the second frequency band.

By applying a correction depending on the different propagation characteristics of the first frequency band and the second frequency band, the home base station can appropriately set its maximum transmission power value without relying on long and complex inter-RAT measurements.

According to still another aspect, the present invention concerns computer programs which can be directly loadable into a programmable device, comprising instructions or portions of code for implementing the steps of the method according to the invention, when said computer programs are executed on a programmable device.

The present invention also concerns information storage means, storing a computer program comprising a set of instructions that can be run by a processor for implementing the aforementioned method in any one of its various embodiments, when the stored information is read by a computer and run by a processor.

Since the features and advantages relating to the computer programs and/or the information storage means are the same as those set out above related to the method and device according to the invention, they will not be repeated here.

The characteristics of the invention will emerge more clearly from a reading of the following description of examples of embodiments, the said description being produced with reference to the accompanying drawings, among which :

Fig. 1 represents a wireless cellular telecommunication network in which the present invention is implemented;

Fig. 2 is a diagram representing the architecture of a home base station in which the present invention is implemented ;

Fig. 3 is a diagram representing the architecture of a server in which the present invention is implemented;

Fig. 4 discloses a first example of an algorithm for setting the maximum value of the transmission power of the signals transferred by a home base station through a wireless interface according to the present invention ;

Fig. 5 discloses a second example of an algorithm for setting the maximum value of the transmission power of the signals transferred by a home base station through a wireless interface according to the present invention ;

Fig. 6 discloses a third example of an algorithm for setting the maximum value of the transmission power of the signals transferred by a home base station through a wireless interface according to the present invention ;

Fig. 7 discloses a fourth example of an algorithm for setting the maximum value of the transmission power of the signals transferred by a home base station through a wireless interface according to the present invention ;

Fig. 8 discloses a fifth example of an algorithm for setting the maximum value of the transmission power of the signals transferred by a home base station through a wireless interface according to the present invention ;

Fig. 9 discloses a sixth example of an algorithm for setting the maximum value of the transmission power of the signals transferred by a home base station through a wireless interface according to the present invention.

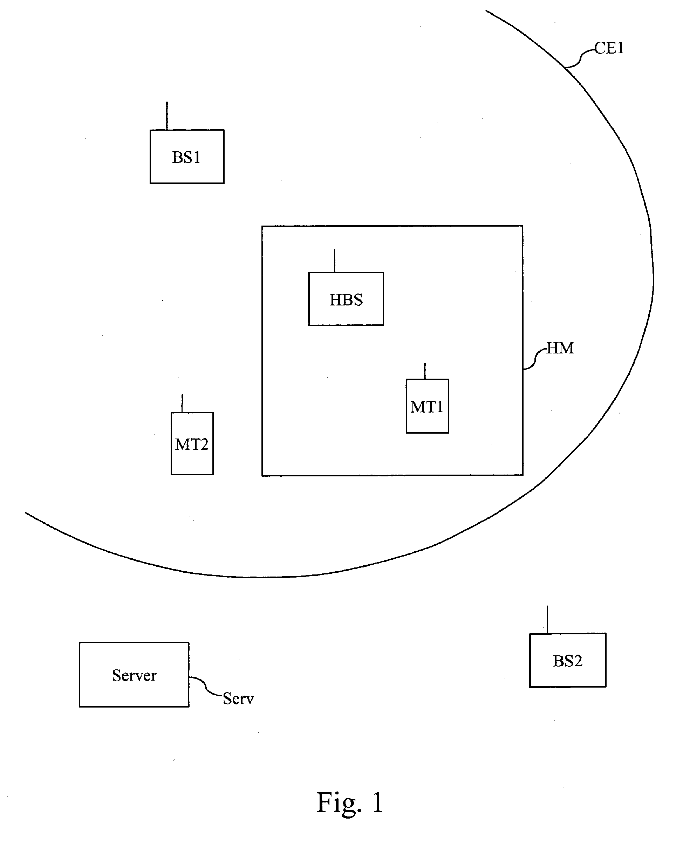

**Fig. 1** represents a wireless cellular telecommunication network in which the present invention is implemented.

In Fig. 1, two base stations BS1 and BS2 and one home base station HBS of a wireless cellular telecommunication network are shown.

Only two base stations BS and one home base station HBS are shown but we can understand that the present invention works when a more important number of base stations BS and/or home base stations HBS exist.

The base station BS1 is for example a base station of a wireless cellular telecommunication network which serves mobile terminals located in the cell CE1 of the base station BS1.

Only two mobile terminals MT1 and MT2 are shown in Fig. 1 for the sake of clarity.

The home base station HBS is named also a femto base station or pico base station or relay. For example, a relay is a home base station HBS which is connected to the wireless cellular telecommunication network via a wireless link with the base station BS1.

The home base station HBS is located into a building or home HM and may enable mobile terminals MT associated to the home base station HBS to access the wireless cellular telecommunication network.

For example, a home base station HBS and a mobile terminal MT, like for example the mobile terminal MT1, are associated when the mobile terminal MT1 belongs to the owner of the home base station HBS or when the mobile terminal MT1 belongs to the family or friends of the owner of the home base station HBS.

When a mobile terminal MT is served by a base station BS or a home base station HBS, it can receive or establish or continue a communication with a remote telecommunication device through the base station BS or the home base station HBS.

The base station BS1 is able to receive signals transferred by the mobile terminal MT2 which is located in the area or cell CE1. The base station BS1 transfers signals which can be received and processed by the mobile terminal MT2 located in the cell CE1. In the example of Fig. 1, the base station BS1 has only one cell CE1. The present invention is also applicable when the base station BS1 has plural cells.

The home base station HBS serves the mobile terminal MT1. The home base station HB S is able to receive signals transferred by the mobile terminal MT1 which is located in the area or cell.

According to the example of Fig. 1, the cell of the home base station HBS is limited within the building HM but may cover a larger area than the building HM. The home base station HBS transfers signals which can be received and processed by the mobile terminal MT1.

The mobile terminal MT1 and the home base station HBS receive signals from the base stations BS1 and BS2 and from neighbouring base stations and/or home base stations not shown in Fig. 1. These received signals interfere on signals transferred by the home base station HBS.

In Fig. 1, a server Serv is shown. The server Serv is a core network device that may control plural cells of plural base stations BS and plural cells of plural home base stations HBS and may execute at least a part of present algorithms according to the present invention. The server Serv may also be named a coordinator.

According to the invention, the home base station:

- obtains the power value of received radio signals transferred by the base station which serves at least one mobile terminal located in the vicinity of the home base station,

- set the maximum value of the transmission power of the signals transferred by the home base station according to the obtained power value of received radio signals transferred by the base station taking into account a wall penetration factor of the building and aiming at making the worst signal to interference plus noise ratio of a mobile terminal served by base station and located in the vicinity of the home base station equal to the worst signal to interference plus noise ratio of a mobile terminal served by the home base station.

For all possible positions of the mobile terminals MT1 served by the home base station HBS, the power value $P_{F,u}$ of signals transferred by the home base station HBS and received by the mobile terminal MT1 is larger than or equal to the power value $P_{F,CE}$ of signals transferred by the home base station HBS and received at the cell edge of the home base station HBS.

The signal to interference plus noise (SINR) ratio experienced by the mobile terminal MT2 served by the base station BS1 and located in the vicinity of the home base station, i.e. close to the cell of the home base station HBS is expressed as:

$$SINR_{MUE} = \frac{P_{M,u}}{P_{F,i} + P_i + N} \geq \frac{P_{M,i}}{a^2 P_{F,CE}} \frac{\dfrac{a P_{F,CE}}{P_i + N}}{\dfrac{a P_{F,CE}}{P_i + N} + 1} = \gamma \, ,$$

where $a$ is the wall penetration factor of the building HM. $a < 1$ represents the wall attenuation, i.e., the wall penetration loss of the building HM, $N$ is the noise level at the mobile terminal MT, $P_{M,u}$ is the power value of signals transferred by the base station BS1 and received by the mobile terminal MT2, $P_{F,CE}$ is the power value of signals transferred by the home base station HBS and received at the cell edge of the home base station HBS, $P_{M,i}$ is the power value of signals transferred by the base station BS1 and received by the mobile terminal MT 1, i. e. the interference received by the mobile terminal MT1 from the base station BS1, $P_i$ is the power value of signals transferred by the base station BS2 and received by the mobile terminal MT1, i.e. the interference received by the mobile terminal MT1 from the base stations and/or home base stations not serving mobile terminals located near the building HM, like the base station BS2.

The power value $P_{M,i}$ of signals transferred by the base station BS1 and received by the mobile terminal MT1 may be measured by the mobile terminal MT1 or by the home base station HBS.

If the power value $P_{M,i}$ of signals transferred by the base station BS1 and received by the mobile terminal MT1 is measured by the home base station HBS, it is considered as constant within the cell of the home base station HBS.

The power value $P_i$ may be measured by the mobile terminal MT1 or by the home base station HBS.

If the power value $P_i$ is measured by the home base station HBS, it is considered as constant within the cell of the home base station HBS.

The noise level $N$ at the mobile terminal is considered as being the same for all the mobile terminals. The noise level $N$ at the mobile terminal comprises any noise like the thermal noise except the noise generated by signals transferred by the base station BS1 and received by the mobile terminal MT1 and by signals transferred by the base station BS2 and received by the mobile terminal MT1.

It has to be noted here that, if the mobile terminal MT1 is outside the building HM, which can occur just before the hand-over of the mobile terminal MT1 from the home base station HBS to the base station BS1, then the power value of signals received by the mobile terminal MT1 from the home base station HBS is attenuated by $a$ while the interference power values received from base station BS1 and from base station BS2 are 1/a larger than the case when the mobile terminal MT1 is in the building HM.

Furthermore, it has to be noted here that usually $10\log_{10}(a) \leq -5\text{dB}$.

According to the invention, the lower bound is obtained by setting $P_{M,u} \geq P_{M,i} / a$, i.e., the wireless link between the mobile terminal MT2 and the base station BS1 has a path gain higher than the wireless link between the mobile terminal MT1 and the base station BS1 with a correction of the wall penetration factor.

Furthermore, it is assumed that $P_{F,i} \leq a P_{F,CE} \leq a P_{F,u}$, i.e., that the power value $P_{F,i}$ of signals transferred by the home base station HBS and received by the mobile terminal MT2 is lower than $P_{F,u}$ which is the power value of signals transferred by the home base station HBS and received by the mobile terminal MT1, multiplied by the wall penetration factor.

We consider $P_{F,i} \leq a P_{F,CE}$. In other words, one can assume that in the worst case, the mobile terminal MT1 is close to a wall and the mobile terminal MT2 is right behind the wall.

The value $\gamma$ is a target SINR for the mobile terminal MT2 served by the base station BS1 lying close to and outside the building HM.

The signal to interference plus noise ratio $SINR_{FUE}$ experienced by the mobile terminal MT1 served by the home base station HBS is expressed as:

$$SINR_{FUE} = \frac{P_{F,u}}{P_{M,i} + aP_i + N}$$

The signal to interference plus noise ratio $SINR_{F,CE}$ experienced by a mobile terminal MT served by the home base station HBS and at the cell edge of the home base station HBS is expressed as:

$$SINR_{F,CE} = \frac{P_{F,CE}}{P_{M,i} + aP_i + N}$$

According to the invention, the home base station HBS radio signals transmit power value is set such that to guarantee a minimal performance for the mobile terminal MT2. This is achieved by setting $\gamma$ to a given value. The home base station HBS maximum radio signals transmit power value can be set such that the received power at the cell edge of the home base station HBS is not greater than $P_{F,CE}$.

$$P_{F,CE} = \frac{1}{a^2}\left(\frac{P_{M,i}}{\gamma} - a(P_i + N)\right) = SINR_{F,CE}P_{M,i}\left(1 + 1/\phi\right)$$

where $\phi = P_{M,i} / (aP_i + N)$ is the SINR for a mobile terminal MT served by the base station BS1 and located in the building HM when the home base station HBS is shut down. The wall penetration factor may be measured by a technician or deduced from measurements executed by the owner of the home base station HBS or may be upper bounded by $a_{max}$ (e.g. -5dB) or may be deduced from measurements performed by the mobile terminals MT served by the home base station HBS and/or by the home base station HBS, for example when mobile terminals enter of leave the building HM.

$P_{F,CE}$ represents the upper bound at the cell edge of the home base station HBS. Radio signals transmit power of the home base station corresponding to lower received power at the cell edge of the home base station HBS than $P_{F,CE}$, for example 90% of $P_{F,CE}$, may also be used according to the present invention.

By limiting the home base station HBS radio signals transmit power, the worst SINR in the building HM is expressed as

$$SINR_{F,CE} = \frac{1}{a^2\gamma} \frac{\phi - \gamma\dfrac{\eta + a}{\eta + 1}}{\phi + 1}$$

where $\eta = aP_i / N$ indicates whether the system is interference or noise limited in the building HM when the home base station HBS is not turned on.

According to the invention, the worst SINR of a mobile terminal MT served by base station BS1 and close to the building HM is set equal to the worst SINR in the building HM $SINR_{F,CE}$:

$$SINR_{1F,CE} = \gamma = \frac{\sqrt{4a^2\phi(\phi+1) + \left(\dfrac{\eta+a}{\eta+1}\right)^2} - \dfrac{\eta+a}{\eta+1}}{2a^2(\phi+1)}$$

and the maximum value of the transmission power of signals transferred by the home base station and received at the cell edge of the home base station HBS is:

$$P_{1F,CE} = SINR_{F,CE} P_{M,i} \left(1 + 1/\phi\right) = \frac{1}{a^2}\left(\frac{P_{M,i}}{\gamma} - a(P_i + N)\right) = \frac{P_{M,i}}{a^2}\left(\frac{1}{\gamma} - \frac{1}{\phi}\frac{\eta + a}{\eta + 1}\right)$$

which guarantees that the SINR of the mobile terminal MT2 served by the base station BS1 is higher than $\gamma$.

It has to be noted here that we could generalize this by solving $\lambda SINR_{1F,CE} = \gamma$ , where $\lambda$ is SINR penalty for the home base station HBS.

This strategy can be efficiently applied for large values of $\phi$, i.e, at the base station BS1 cell center, i.e., when the home base station HBS lies at the base station BS1 cell center.

The SINR for the mobile terminal MT2 served by the base station BS1 and close to the building HM when the home base station HBS is not activated is equal to $\phi\dfrac{\eta + 1}{\eta + a}$. One can take a target SINR $\gamma$ for the home base station HBS radio signals transmit power setting such that the SINR for the mobile terminal MT2 served by the base station BS1 is degraded at maximum by a degradation factor $\rho$. For example $\rho$, if expressed in decibels, is equal to -0.5dB. Thus the target SINR for the mobile terminal MT2 served by the base station BS1 is :

$$\gamma = \rho\phi\frac{\eta + 1}{\eta + a}$$

In that case, the SINR for the mobile terminal MT1 served by the home base station HBS at the cell-edge must not exceed:

$$SINR_{2F,CE} = \frac{1}{a^2\left(\phi + 1\right)}\left(\frac{1}{\rho} - 1\right)\frac{\eta + a}{\eta + 1}.$$

It has to noted here that the factor $\rho$ is a SINR degradation. The factor $\rho$ may also represent the degradation of other items like, for example, the Shannon capacity.

In that case, $f\left(\gamma\right) = \rho f\left(\phi\dfrac{\eta + 1}{\eta + a}\right).$

Thus, we see that with this approach the home base station HBS performance decreases when the SINR or equivalently $\phi$ of the mobile terminal MT2 served by the base station BS1 increases. Thus, the home base station HBS radio signal power setting behaves better in base station BS1 dead zones or at the base station BS1 cell edge where its interference on mobile terminals served by the base station BS1 becomes negligible with respect to other sources of noise and interference.

According to a particular mode of realisation of the present invention, $SINR_{1F,CE}$ and $SINR_{2F,CE}$ are combined in order to have complementary benefits.

$SINR_{1F,CE}$ and $SINR_{2F,CE}$ may be linearly combined or non linearly combined, like by taking the maximum value of $SINR_{1F,CE}$ and $SINR_{2F,CE}$.

For example, the SINR is set at the home base station HBS femto cell edge as the sum of the two $SINR_{1F,CE}$ and $SINR_{2F,CE}$. Then:

$$SINR_{F,CE} = \frac{1}{a^2\left(\phi + 1\right)}\left(\frac{1}{\rho} - 1\right)\frac{\eta + a}{\eta + 1} + \frac{\sqrt{4a^2\phi(\phi + 1) + \left(\dfrac{\eta + a}{\eta + 1}\right)^2} - \dfrac{\eta + a}{\eta + 1}}{2a^2\left(\phi + 1\right)}$$

The maximum received power value at the home base station HBS cell edge is set to:

$$P_{F,CE} = SINR_{F,CE} P_{M,i} \left(1 + 1/\phi\right)$$

If $G$ is the lowest path gain in building HM between the home base station HBS and the mobile terminal MT1 served by the home base station HBS, then the maximum radio signal transmit power value of the home base station HBS is set to $P_{F,CE}/G$, which means that the maximum value of the radio signal transmit power of the home base station HBS is set to:

$$P_t = \frac{P_{M,i}}{G} SINR_{F,CE} \left(1 + 1/\phi\right).$$

$G$ is for example determined on long term basis, for example using measurement reports transferred by mobile terminals MT served by the home base station HBS.

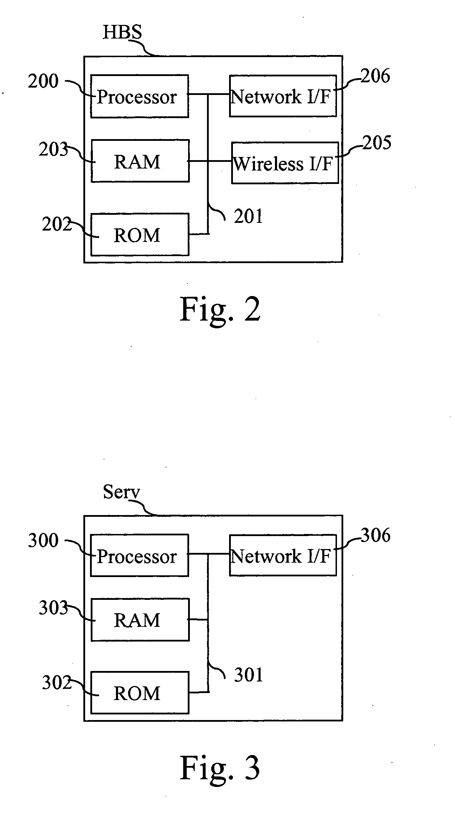

**Fig. 2** is a diagram representing the architecture of a home base station in which the present invention is implemented.

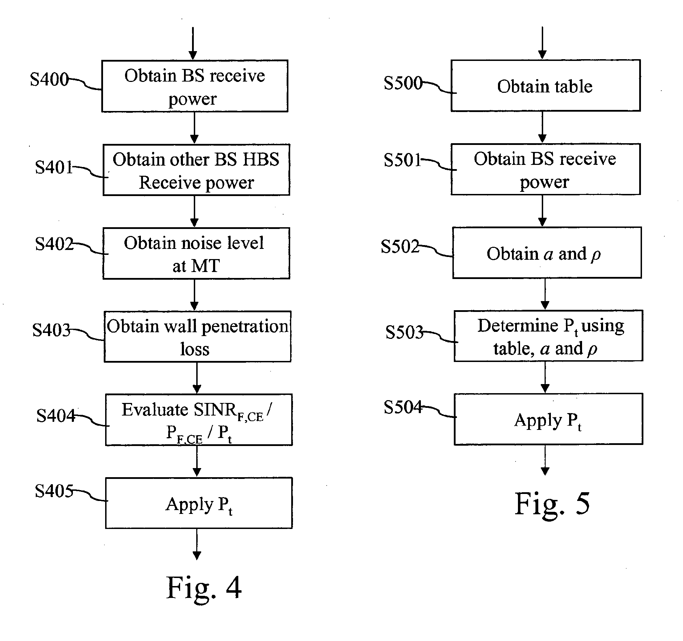

The home base station HBS has, for example, an architecture based on components connected together by a bus 201 and a processor 200 controlled by the programs as disclosed in Figs. 4 to 9.

The bus 201 links the processor 200 to a read only memory ROM 202, a random access memory RAM 203, a wireless interface 205 and a network interface 206.

The memory 203 contains registers intended to receive variables and the instructions of the programs related to the algorithms as disclosed in Figs. 4 to 9.

The processor 200 controls the operation of the network interface 206 and of the wireless interface 205.

The read only memory 202 contains instructions of the program related to the algorithms as disclosed in Figs. 4 to 9, which are transferred, when the home base station HBS is powered on, to the random access memory 203.

The home base station HBS may be connected to a backbone network not shown in Fig. 1 through the network interface 206. For example, the network interface 206 is a DSL (Digital Subscriber Line) modem, or an ISDN (Integrated Services Digital Network) interface or a wireless link linking the home base station HBS to the core network, the server Serv and/or the base stations BS, etc. Through the network interface 206, the home base station HBS may transfer messages to the core network of the wireless cellular telecommunication network.

The wireless interface 205 and the network interface 206 are the resources of the home base station HBS used by the mobile terminal MT1 in order to access to the wireless cellular telecommunication network when the mobile terminal MT1 establishes or receives a communication with a remote telecommunication device.

**Fig. 3** is a diagram representing the architecture of a server in which the present invention may be implemented.

The server Serv has, for example, an architecture based on components connected together by a bus 301 and a processor 300 controlled by part of the programs as disclosed in Figs. 4 to 9.

The bus 301 links the processor 300 to a read only memory ROM 302, a random access memory RAM 303 and a network interface 306.

The random access memory 303 contains registers intended to receive variables and the instructions of parts of the program related to the algorithms as disclosed in Fig. 4 to 9.

The processor 300 controls the operation of the network interface 306.

The read only memory 302 contains instructions of parts of the programs related to the algorithms as disclosed in Fig. 4 to 9, which are transferred, when the server Serv is powered on, to the random access memory 303.

The server Serv is connected to a backbone network through the network interface 306. For example, the network interface 306 is a DSL modem, or an ISDN interface, etc. Through the network interface 306, the server Serv may transfer and/or receive messages to and/or from the home base stations HBS.

Any and all steps of the algorithms described hereinafter with regard to Fig. 4 to 9 may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

**Fig. 4** discloses a first example of an algorithm for setting the maximum value of the transmission power of the signals transferred by a home base station through a wireless interface according to the present invention.

More precisely, the present algorithm is executed by the processor 200 of the home base station HBS when the home base station HBS is powered on and/or periodically and/or when a mobile terminal MT starts or ends to be served by the home base station HBS.

At step S400, the processor 200 obtains, from the wireless interface 205, the power value of received radio signals transferred by the base station BS1 which serves mobile terminals, like mobile terminal MT2, located in the vicinity of the home base station HBS. The power value of received radio signals transferred by the base station BS1 is measured by the wireless interface 205 of the home base station HBS or retrieved from measurement reports of signals received by mobile terminals, like the mobile terminal MT1, served by the home base station HBS.

At step S401, the processor 200 obtains, from the wireless interface 205, the power value of received radio signals transferred by the base station BS2 which does not serve mobile terminals located in the vicinity of the home base station HBS. The power value of received radio signals transferred by the base station BS2 is measured by the wireless interface 205 of the home base station HBS or retrieved from measurement reports of signals received by mobile terminals, like the mobile terminal MT1, served by the home base station HBS.

At next step S402, the processor 200 obtains the noise level $N$ at the mobile terminal MT1 served by the home base station HBS.

The noise level may be a predetermined value stored in the RAM memory 203 or transferred by the mobile terminal MT1.

At next step S403, the processor 200 obtains the wall penetration factor $a$.

The wall penetration factor $a$ may be a predetermined value stored in the RAM memory 203 or may be measured by a technician or deduced from measurements executed by the owner of the home base station HBS.

At next step S404, the processor 200 evaluates the SINR at the home base station HBS cell edge and/or the received power at the home base station HBS cell edge and /or the radio signal transmit power of the home base station HBS.

For example, the SINR at the home base station HBS cell edge is equal to $SINR_{1F,CE}$ or is equal to the sum of $SINR_{1F,CE}$ and $SINR_{2F,CE}$. In the latter case:

$$SINR_{F,CE} = \frac{1}{a^2(\phi+1)}\left(\frac{1}{\rho}-1\right)\frac{\eta+a}{\eta+1} + \frac{\sqrt{4a^2\phi(\phi+1)+\left(\frac{\eta+a}{\eta+1}\right)^2}-\frac{\eta+a}{\eta+1}}{2a^2(\phi+1)}$$

The maximum received power value at the home base station HBS cell edge is equal to:

$$P_{F,CE} = SINR_{F,CE}P_{M,i}\left(1+1/\phi\right)$$

The maximum radio signal transmit power value of the home base station HBS is equal to:

$$P_t = \frac{P_{M,i}}{G}SINR_{F,CE}\left(1+1/\phi\right).$$

$G$ is for example determined on long term basis, for example using measurement reports transferred by mobile terminals MT served by the home base station HBS.

If the SINR at the home base station HBS cell edge is equal to $SINR_{1F,CE}$, the maximum radio signal transmit power value of the home base station HBS aims at having the worst signal to interference plus noise ratio of a mobile terminal served by base station and located in the vicinity of the home base station equal to the worst signal interference plus noise ratio of a mobile terminal served by the home base station

It has to be noted here that, in a variant, the steps S403 and/or S404 is or are executed by the server Serv instead of the home base station HBS. The home base station HBS transfers the information obtained at steps S400, S401, S402 or S400 to S403 to the server Serv which transfers in response the maximum radio signal transmit power of the home base station HBS.

At next step S405, the processor 200 commands the wireless interface in order to apply the maximum radio signal transmit power value $P_t$ or at least a non null transmit power value and at most the maximum radio signal transmit power value $P_t$.

For instance, the applied power value is at minimum equal to 90% of the maximum radio signal transmit power value $P_t$.

**Fig. 5** discloses a second example of an algorithm for setting the maximum value of the transmission power of the signals transferred by a home base station through a wireless interface according to the present invention.

More precisely, the present algorithm is executed by the processor 200 of the home base station HBS when the home base station HBS is powered on and/or periodically and/or when a mobile terminal MT starts or ends to be served by the home base station HBS.

At step S500, the processor 200 obtains a table linking the reception power of the signals transferred by the base station BS and a maximum radio signal transmission power value of the home base station HBS.

For example, the table is stored in the ROM memory 202 or received from the server Serv through the network interface 206.

At step S501, the processor 200 obtains, from the wireless interface 205, the power value of received radio signals transferred by the base station BS1 which serves mobile terminals, like mobile terminal MT2, located in the vicinity of the home base station HBS. The power value of received radio signals transferred by the base station BS1 is measured by the wireless interface 205 of the home base station HBS or retrieved from measurement reports of signals received by mobile terminals, like the mobile terminal MT1, served by the home base station HBS.

At next step S502, the processor 200 obtains the wall penetration factor $a$ and the degradation factor $\rho$.

The wall penetration factor $a$ may be a predetermined value stored in the RAM memory 203 or may be measured by a technician or deduced from measurements executed by the owner of the home base station HBS. The factor $\rho$ may be a predetermined value stored in the RAM memory 203 or may be set by a technician.

At next step S503, the processor 200 determines the maximum radio signal transmit power value of the home base station HBS using the table obtained at step S500 and the power value of received radio signals transferred by the base station BS1 and shifts the determined maximum transmit power value by a function which depends on the wall penetration factor $a$, the degradation factor $\rho$ and aiming at having the worst signal to interference plus noise ratio of a mobile terminal served by base station and located in the vicinity of the home base station equal to the worst signal interference plus noise ratio of a mobile terminal served by the home base station..

At next step S504, the processor 200 commands the wireless interface 206 in order to apply the maximum shifted radio signal transmit power value $P_t$ or at least a non null transmit power value and at most the maximum shifted radio signal transmit power value $P_t$.

For instance, the applied shifted radio signal transmit power value is at minimum equal to 90% of the maximum shifted radio signal transmit power value $P_t$.

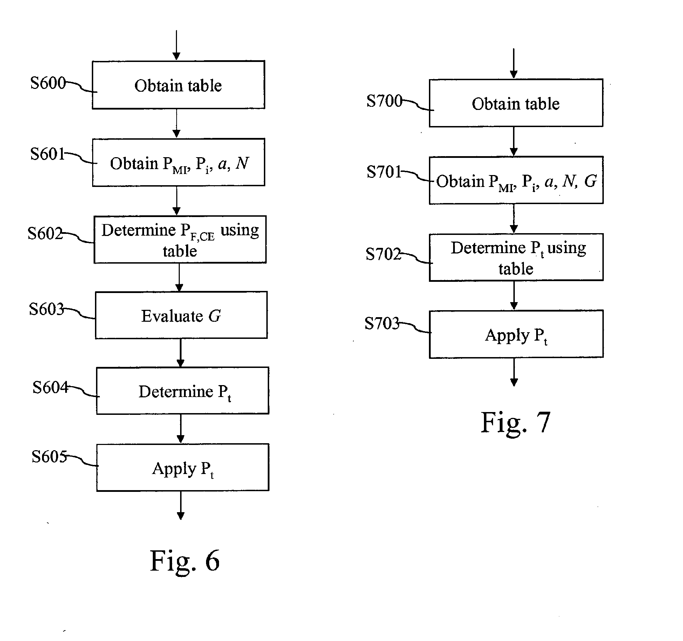

**Fig. 6** discloses a third example of an algorithm for setting the maximum value of the transmission power of the signals transferred by a home base station through a wireless interface according to the present invention.

More precisely, the present algorithm is executed by the processor 200 of the home base station HBS when the home base station HBS is powered on and/or periodically and/or when a mobile terminal MT starts or ends to be served by the home base station HBS.

At step S600, the processor 200 obtains a table linking the received power at the cell edge of the home base station HBS to the wall penetration factor $a$ of the building HM, the noise level $N$ at the mobile terminal MT, the power value of signals $P_{M,i}$ transferred by the base station BS1 and received by the mobile terminal MT1 and the power value of signals $P_i$ transferred by the base station BS2 and received by the mobile terminal MT1. The table aims at having the worst signal to interference plus noise ratio of a mobile terminal served by base station and located in the vicinity of the home base station equal to the worst signal to interference plus noise ratio of a mobile terminal served by the home base station.

For example, the table is stored in the ROM memory 202 or received from the server Serv through the network interface 206.

At next step S601, the processor 200 obtains the wall penetration factor $a$ of the building HM, the noise level $N$ at the mobile terminal MT, the power value of signals $P_{M,i}$ transferred by the base station BS1 and received by the mobile terminal MT1 and the power value of signals $P_i$ transferred by the base station BS2 and received by the mobile terminal MT 1.

The above mentioned obtained values are derived from measurement reports received from the mobile terminal MT1 or from data stored in the RAM memory 203 or measured by the wireless interface 205.

At next step S602, the processor 200 determines the received power value at the cell edge of the home base station HBS using the table obtained at step S600 and the wall penetration factor $a$ of the building HM, the noise level $N$ at the mobile terminal MT, the power value of signals $P_{M,i}$ transferred by the base station BS1 and received by the mobile terminal MT1 and the power value of signals $P_i$ transferred by the base station BS2 and received by the mobile terminal MT1.

At next step S603, the processor 200 evaluates the lowest path gain $G$ in building HM between the home base station HBS and the mobile terminal MT1 served by the home base station HBS.

$G$ is for example determined on long term basis, for example using measurement reports transferred by mobile terminals MT served by the home base station HBS.

At next step S604, the processor 200 determines the maximum radio signal transmit power value of the home base station HBS using the determined received power value at the cell edge of the home base station HBS and the lowest path gain $G$ in building HM between the home base station HBS and a mobile terminal MT1 served by the home base station HBS.

At next step S605, the processor 200 commands the wireless interface 206 in order to apply the maximum radio signal transmit power value $P_t$ or at least a non null transmit power value and at most the maximum radio signal transmit power value $P_t$.

For instance, the applied power value is at minimum equal to 90% of the maximum radio signal transmit power value $P_t$.

**Fig. 7** discloses a fourth example of an algorithm for setting the maximum value of the transmission power of the signals transferred by a home base station through a wireless interface according to the present invention.

More precisely, the present algorithm is executed by the processor 200 of the home base station HBS when the home base station HBS is powered on and/or periodically and/or when a mobile terminal MT starts or ends to be served by the home base station HBS.

At step S700, the processor 200 obtains a table linking a maximum radio signal transmission power value of the home base station HBS to the wall penetration factor $a$ of the building HM, the noise level $N$ at the mobile terminal MT, the power value of signals $P_{M,i}$ transferred by the base station BS1 and received by the mobile terminal MT1, the power value of signals $P_i$ transferred by the base station BS2 and received by the mobile terminal MT1 and the lowest path gain $G$ in building HM between the home base station HBS and a mobile terminal MT1 served by the home base station HBS.

For example, the table is stored in the ROM memory 202 or received from the server Serv through the network interface 206.

The table aims at making the worst signal to interference plus noise ratio of a mobile terminal served by base station and located in the vicinity of the home base station equal to the worst signal to interference plus noise ratio of a mobile terminal served by the home base station.

At next step S701, the processor 200 obtains the wall penetration factor $a$ of the building HM, the noise level $N$ at the mobile terminal MT, the power value of signals $P_{M,i}$ transferred by the base station BS1 and received by the mobile terminal MT 1, the power value of signals $P_i$ transferred by the base station BS2 and received by the mobile terminal MT1 and the lowest path gain $G$ in building HM between the home base station HBS and the mobile terminal MT1 served by the home base station HBS.

The above mentioned obtained values are derived from measurement reports received from the mobile terminal MT1 or from data stored in the RAM memory 203 or measured by the wireless interface 205.

At next step S702, the processor 200 determines the maximum radio signal transmit power value of the home base station HBS using the table obtained at step S700 and data obtained at step S701.

At next step S703, the processor 200 commands the wireless interface in order to apply the maximum radio signal transmit power value $P_t$ or at least a non null transmit power value and at most the maximum radio signal transmit power value $P_t$.

For instance, the applied power value is at minimum equal to 90% of the maximum radio signal transmit power value $P_t$.

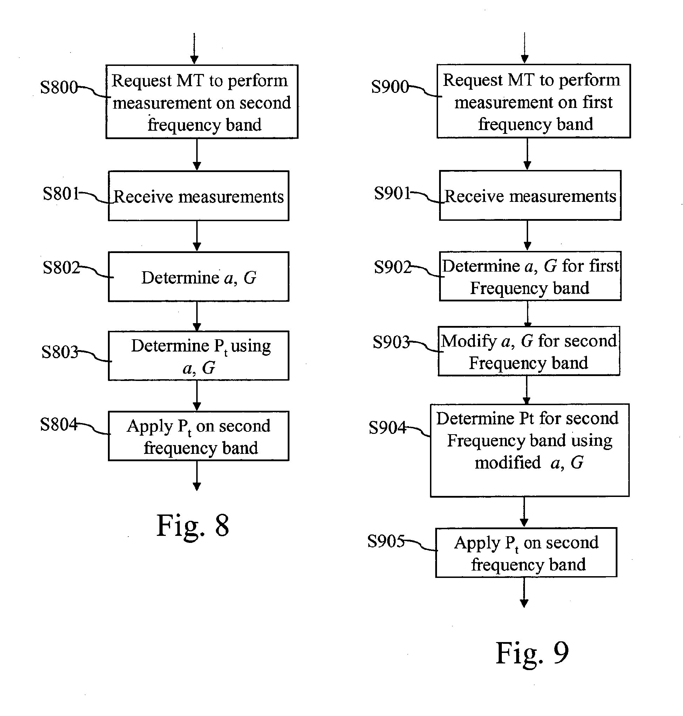

**Fig. 8** discloses a fifth example of an algorithm for setting the maximum value of the transmission power of the signals transferred by a home base station through a wireless interface according to the present invention.

More precisely, the present algorithm is executed by the processor 200 of the home base station HBS when the home base station HBS is powered on and/or periodically and/or when a mobile terminal MT starts or ends to be served by the home base station HBS.

In the fifth example, the home base station HBS is able to serve mobile terminals using a first protocol of communication wherein the radio signals are transferred in a first frequency band. The home base station HBS is also able to serve mobile terminals using a second protocol of communication different from the first protocol of communication wherein the radio signals are transferred in a second frequency band which is different from the first frequency band.

At step S800, the processor 200 commands the transfer of a message through the wireless interface 205 and using the first protocol of communication. The message is a request to perform some measurements on the second frequency band.

At step S801, the processor 200 detects the reception, through the wireless interface of measurements performed by the mobile terminal MT1.

For example, measurements are the noise level $N$ at the mobile terminal MT, the power value of signals $P_{M,i}$ transferred by the base station BS1 and received by the mobile terminal MT1, the power value of signals $P_i$ transferred by the base station BS2 and received by the mobile terminal MT1.

At next step S802, the processor 200 evaluates, for the second frequency band, the lowest path gain $G$ in building HM between the home base station HBS and a mobile terminal MT1 served by the home base station HBS.

$G$ is for example determined on long term basis, for example using measurement reports transferred by mobile terminals MT served by the home base station HBS.

At the same step, the processor 200 obtains the wall penetration factor *a* for the second frequency band.

The wall penetration factor *a* may be a predetermined value stored in the RAM memory 203 or may be measured by a technician or deduced from measurements executed by the owner of the home base station HBS.

At next step S803, the processor 200 determines, for the second frequency band, the maximum radio signal transmit power value of the home base station HBS using received measurements, the wall penetration factor *a* and the lowest path gain *G* in building HM between the home base station HBS and a mobile terminal MT1 served by the home base station HBS.

For example, the SINR at the home base station HBS cell edge is equal to $SINR_{1F,CE}$ or is equal to the sum of $SINR_{1F,CE}$ and $SINR_{2F,CE}$. In the latter case:

$$SINR_{F,CE} = \frac{1}{a^2(\phi+1)}\left(\frac{1}{\rho}-1\right)\frac{\eta+a}{\eta+1} + \frac{\sqrt{4a^2\phi(\phi+1)+\left(\frac{\eta+a}{\eta+1}\right)^2} - \frac{\eta+a}{\eta+1}}{2a^2(\phi+1)}$$

The maximum received power value at the home base station HBS cell edge is equal to:

$$P_{F,CE} = SINR_{F,CE} P_{M,i}\left(1+1/\phi\right)$$

The maximum radio signal transmit power value of the home base station HBS is equal to:

$$P_t = \frac{P_{M,i}}{G} SINR_{F,CE}\left(1+1/\phi\right).$$

At next step S804, the processor 200 commands the wireless interface in order to apply the maximum radio signal transmit power value $P_t$ or at least a non null transmit power value and at most the maximum radio signal transmit power value $P_t$ for the second frequency band.

For instance, the applied power value is at minimum equal to 90% of the maximum radio signal transmit power value $P_t$.

**Fig. 9** discloses a sixth example of an algorithm for setting the maximum value of the transmission power of the signals transferred by a home base station through a wireless interface according to the present invention.

More precisely, the present algorithm is executed by the processor 200 of the home base station HBS when the home base station HBS is powered on and/or periodically and/or when a mobile terminal MT starts or ends to be served by the home base station HBS.

In the sixth example, the home base station HBS is able to serve mobile terminals using a first protocol of communication wherein the radio signals are transferred in a first frequency band. The home base station HBS is also able to serve mobile terminals using a second protocol of communication different from the first protocol of communication wherein the radio signals are transferred in a second frequency band which is different from the first frequency band.

At step S900, the processor 200 commands the transfer of a message through the wireless interface 205 and using the first protocol of communication. The message is a request to perform some measurements on the first frequency band.

At step S901, the processor 200 detects the reception, through the wireless interface of measurements performed by the mobile terminal MT1.

For example, measurements are the noise level *N* at the mobile terminal MT, the power value of signals $P_{M,i}$ transferred by the base station BS1 and received by the mobile terminal MT1, the power value of signals $P_i$ transferred by the base station BS2 and received by the mobile terminal MT1.

At next step S902, the processor 200 evaluates, for the first frequency band, the lowest path gain *G* in building HM between the home base station HBS and a mobile terminal MT1 served by the home base station HBS.

*G* is for example determined on long term basis, for example using measurement reports transferred by mobile terminals MT served by the home base station HBS.

At the same step, the processor 200 obtains, for the first frequency band, the wall penetration factor *a.*

The wall penetration factor $a$ may be a predetermined value stored in the RAM memory 203 or may be measured by a technician or deduced from measurements executed by the owner of the home base station HBS.

A next step S903, the processor 200 modifies, using correction coefficients between the first and second frequency bands, the determined wall penetration factor $a$ and the lowest path gain $G$ in building HM between the home base station HBS and the mobile terminal MT1 served by the home base station HBS.

The correction coefficients are for example stored in the ROM memory 202 of the home base station HBS

At next step S904, the processor 200 determines the maximum radio signal transmit power value of the home base station HBS using received measurements, the corrected wall penetration factor $a$ and the corrected lowest path gain $G$.

For example, the maximum SINR at the home base station HBS cell edge is equal to $SINR_{1F,CE}$ or is equal to the sum of $SINR_{1F,CE}$ and $SINR_{2F,CE}$. In the latter case:

$$SINR_{F,CE} = \frac{1}{a^2(\phi+1)}\left(\frac{1}{\rho}-1\right)\frac{\eta+a}{\eta+1} + \frac{\sqrt{4a^2\phi(\phi+1)+\left(\frac{\eta+a}{\eta+1}\right)^2}-\frac{\eta+a}{\eta+1}}{2a^2(\phi+1)}$$

The maximum received power value at the home base station HBS cell edge is equal to:

$$P_{F,CE} = SINR_{F,CE}P_{M,i}\left(1+1/\phi\right)$$

The maximum radio signal transmit power value of the home base station HBS is equal to:

$$P_t = \frac{P_{M,i}}{G}SINR_{F,CE}\left(1+1/\phi\right).$$

At next step S904, the processor 200 commands the wireless interface in order to apply maximum the radio signal transmit power value $P_t$ or at least a non null transmit power value and at most the maximum radio signal transmit power value $P_t$ for the second frequency band.

For instance, the applied power value is at minimum equal to 90% of the maximum radio signal transmit power value $P_t$.

Naturally, many modifications can be made to the embodiments of the invention described above without departing from the scope of the present invention.

**Claims**

1. Method for setting a maximum value of a transmission power of signals transferred by a home base station (HBS) through a wireless interface, the home base station being located in a building (HM) located in the cell (CE1) of a base station (BS1), **characterised in that** the method comprises the steps of:

   - obtaining (S400), by the home base station (HBS), the power value of received radio signals transferred by the base station which serves at least one mobile terminal located in the vicinity of the home base station,
   - setting (S405), by the home base station (HBS), the maximum transmission power value of the signals transferred by the home base station according to the obtained power value of received radio signals transferred by the base station taking into account a wall penetration factor of the building and aiming at making the worst signal to interference plus noise ratio of a mobile terminal served by base station and located in the vicinity of the home base station equal to the worst signal to interference plus noise ratio of a mobile terminal served by the home base station.

2. Method according to claim 1, **characterised in that** the method further comprises the steps of :

- obtaining (S401), by the home base station, the power value of received radio signals transferred by at least another base station and/or another home base station which does not serve the at least one mobile terminal located in the vicinity of the home base station,
- obtaining (S402), by the home base station, the noise level of at least one mobile terminal served by the home base station,

and **in that** the maximum transmission power value of signals transferred by the home base station is set according to the noise level and the power value of received radio signals transferred by at least another base station and/or another home base station which does not serve the at least one mobile terminal located in the vicinity of the home base station.

3. Method according to claim 2, **characterised in that** the maximum transmission power value of signals transferred by the home base station is set aiming at having the worst signal to interference plus noise ratio of a mobile terminal served by the home base station equal to

$$SINR_{1F,CE} = \frac{\sqrt{4a^2\phi(\phi+1)+\left(\frac{\eta+a}{\eta+1}\right)^2} - \frac{\eta+a}{\eta+1}}{2a^2(\phi+1)}.$$

where $\phi = P_{M,I} / (aP_I + N)$ is the signal to interference plus noise ration for a mobile terminal served by the base station and located in the building when the home base station HBS is shut down, $a$ is the wall penetration factor, $P_{M,i}$ is the power value of signals transferred by the base station and received by the mobile terminal, $P_t$ is the power value of received radio signals transferred by at least another base station and/or another home base station which does not serve the at least one mobile terminal located in the vicinity of the home base station, $N$ is the noise level at the mobile terminal MT and $\eta = aP_t / N$.

4. Method according to claim 3, **characterised in that** the maximum transmission power value of signals transferred by the home base station is set according to a transmission power aiming at having the worst signal to interference plus noise ratio for a mobile terminal served by the base station degraded by a given degradation factor compared to a transmission without interference from the home base station.

5. Method according to claim 4, **characterised in that** the maximum transmission power value of signals transferred by the home base station is set according to a transmission power aiming at having the worst signal to interference plus noise ratio of a mobile terminal served by the home base station equal to :

$$SINR_{2F,CE} = \frac{1}{a^2(\phi+1)}\left(\frac{1}{\rho}-1\right)\frac{\eta+a}{\eta+1}$$

where $\rho$ is the degradation factor.

6. Method according to claims 5, **characterised in that** the maximum transmission power value of signals transferred by the home base station is set aiming at having the worst signal to interference plus noise ratio of a mobile terminal served by the home base station equal to

$$SINR_{F,CE} = \frac{1}{a^2(\phi+1)}\left(\frac{1}{\rho}-1\right)\frac{\eta+a}{\eta+1} + \frac{\sqrt{4a^2\phi(\phi+1)+\left(\frac{\eta+a}{\eta+1}\right)^2} - \frac{\eta+a}{\eta+1}}{2a^2(\phi+1)}.$$

7. Method according to claim 1, **characterised in that** the maximum transmission power value of signals transferred by the home base station is set using a table, the obtained power value of received radio signals transferred by the base station being an entry of the table providing a maximum transmission power value which is shifted by a function which depends on the wall penetration factor and a predetermined factor.

8. Method according to claim 1, **characterised in that** the method further comprises the steps of:

- obtaining, by the home base station, the power value of received radio signals transferred by at least another base station and/or another home base station which does not serve at least one mobile terminal located in the vicinity of the home base station,
- obtaining, by the home base station, the noise level of at least one mobile terminal served by the home base station,

and **in that** the maximum transmission power value of signals transferred by the home base station is set using a table, the obtained power values of received radio signals, the wall penetration factor of the building and the noise level being entries of the table.

9. Method according to claim 1, **characterised in that** the method further comprises the steps of:

- obtaining, by the home base station, the power value of received radio signals transferred by at least another base station and/or another home base station which does not serve at least one mobile terminal located in the vicinity of the home base station,
- obtaining, by the home base station, the noise level of at least one mobile terminal served by the home base station,
- obtaining, by the home base station, the lowest path gain in the building between the home base station and a mobile terminal served by the home base station,

and **in that** the maximum transmission power value of signals transferred by the home base station is set using a table, the obtained power values of received radio signals, the lowest path gain, the wall penetration factor of the building and the noise level being entries of the table.

10. Method according to claim 1, **characterised in that** the method comprises further steps, executed by the home base station of :

- transferring a message through the wireless interface and using a first protocol of communication wherein signals are transferred in a first frequency band, the message requesting at least one mobile terminal to perform some measurements on a second frequency band on which signals of a second protocol of communication are transferred,
- receiving, through the wireless interface and using the first protocol of communication, measurements performed by the at least one mobile terminal,
- obtaining for the second frequency band, the lowest path gain in the building between the home base station and a mobile terminal served by the home base station and a wall penetration factor,
- setting the maximum value of the transmission power value of the signals transferred by the home base station in the second frequency band according to the measurements, the wall penetration factor and the lowest path gain.

11. Method according to claim 1, **characterised in that** the method comprises further steps, executed by the home base station of :

- transferring a message through the wireless interface and using a first protocol of communication wherein signals are transferred in a first frequency band, the message requesting at least one mobile terminal to perform some measurements on the first frequency band,
- receiving, through the wireless interface and using the first protocol of communication, measurements performed by the at least one mobile terminal,
- obtaining for the first frequency band, the lowest path gain in the building between the home base station and a mobile terminal served by the home base station and a wall penetration factor,
- transposing in a second frequency band, the lowest path gain in the building between the home base station and the mobile terminal served by the home base station and the wall penetration factor,
- setting the maximum value of the transmission power value of the signals transferred by the home base station in the second frequency band according to the measurements, the transposed the wall penetration factor and the lowest path gain.

12. Device for setting a maximum value of a transmission power of the signals transferred by a home base station through a wireless interface, the home base station being located in a building located in the cell of a base station, **characterised in that** the device comprises:

- means for obtaining the power value of received radio signals transferred by the base station which serves at least one mobile terminal located in the vicinity of the home base station,
- means for setting the maximum value of the transmission power value of the signals transferred by the home base station according to the obtained power value of received radio signals transferred by the base station taking into account a wall penetration factor of the building and aiming at making the worst signal to interference plus noise ratio of a mobile terminal served by base station and located in the vicinity of the home base station equal to the worst signal to interference plus noise ratio of a mobile terminal served by the home base station.

**Patentansprüche**

1. Verfahren zum Einstellen eines maximalen Werts einer Sendeleistung von durch eine Heimbasisstation (HBS) über eine drahtlose Schnittstelle transferierten Signalen, wobei die Heimbasisstation in einem in der Zelle (CE1) einer Basisstation (BS1) lokalisierten Gebäude (HM) lokalisiert ist, **dadurch gekennzeichnet, dass** das Verfahren die folgenden Schritte aufweist:

- Erhalten (S400) des Leistungswerts von durch die Basisstation, die wenigstens ein in der Umgebung der Heimbasisstation lokalisiertes mobiles Endgerät bedient, transferierten empfangenen Funksignalen durch die Heimbasisstation (HBS),
- Einstellen (S405) des maximalen Sendeleistungswerts der durch die Heimbasisstation transferierten Signale gemäß dem erhaltenen Leistungswert von durch die Basisstation transferierten empfangenen Funksignalen unter Berücksichtigung eines Wanddurchdringungsfaktors des Gebäudes und Streben danach, das schlechteste Signal-zu-Interferenzplus-Rausch-Verhältnis eines durch die Basisstation bedienten und in der Umgebung der Heimbasisstation lokalisierten mobilen Endgeräts gleich dem schlechtesten Signal-zu-Interferenz-plus-Rausch-Verhältnis eines durch die Heimbasisstation bedienten mobilen Endgeräts zu machen, durch die Heimbasisstation (HBS).

2. Verfahren nach Anspruch 1, **dadurch gekennzeichnet, dass** das Verfahren weiterhin die folgenden Schritte aufweist:

- Erhalten (S401) des Leistungswerts von durch wenigstens eine weitere Basisstation und/oder eine weitere Heimbasisstation, die das wenigstens eine in der Umgebung der Heimbasisstation lokalisierte mobile Endgerät nicht bedient, transferierten empfangenen Funksignalen durch die Heimbasisstation,
- Erhalten (S402) des Rauschpegels von wenigstens einem durch die Heimbasisstation bedienten mobilen Endgerät durch die Heimbasisstation,

und dass der maximale Sendeleistungswert von durch die Heimbasisstation transferierten Signalen gemäß dem Rauschpegel und dem Leistungswert von durch wenigstens eine weitere Basisstation und/oder eine weitere Heimbasisstation, die das wenigstens eine in der Umgebung der Heimbasisstation lokalisierte mobile Endgerät nicht bedient, transferierten empfangenen Funksignalen eingestellt wird.

3. Verfahren nach Anspruch 2, **dadurch gekennzeichnet, dass** der maximale Sendeleistungswert von durch die Heimbasisstation transferierten Signalen unter einem Streben danach eingestellt wird, dass man das schlechteste Signal-zu-Interferenz-plus-Rausch-Verhältnis eines durch die Heimbasisstation bedienten mobilen Endgeräts gleich folgendem hat:

$$SINR_{1F,CE} = \frac{\sqrt{4a^2 \emptyset(\emptyset+1) + \left(\frac{\eta+a}{\eta+1}\right)^2} - \frac{\eta+a}{\eta+1}}{2a^2(\phi+1)}$$

wobei $\emptyset = P_{M,i}/(aP_i + N)$ das Signal-zu-Interferenz-plus-Rausch-Verhältnis für ein durch die Basisstation bedientes und im Gebäude lokalisiertes mobiles Endgerät ist, wenn die Heimbasisstation HBS außer Betrieb genommen ist, a der Wanddurchdringungsfaktor ist, $P_{M,i}$ der Leistungswert von durch die Basisstation transferierten und durch das mobile Endgerät empfangenen Signalen ist, $P_i$ der Leistungswert von durch wenigstens eine weitere Basisstation und/oder eine weitere Heimbasisstation, die das wenigstens eine in der Umgebung der Heimbasisstation lokalisierte mobile Endgerät nicht bedient, transferierten empfangenen Funksignalen ist, N der Rauschpegel bei dem mobilen Endgerät ist und $\eta = aP_i/N$ gilt.

4.  Verfahren nach Anspruch 3, **dadurch gekennzeichnet, dass** der maximale Sendeleistungswert von durch die Heimbasisstation transferierten Signalen gemäß einer Sendeleistung unter einem Streben danach eingestellt wird, dass man das schlechteste Signal-zu-Interferenz-plus-Rausch-Verhältnis für ein durch die Basisstation bedientes mobiles Endgerät hat, vermindert um einen gegebenen Verminderungsfaktor, verglichen mit einem Senden ohne Interferenz von der Heimbasisstation.

5.  Verfahren nach Anspruch 4, **dadurch gekennzeichnet, dass** der maximale Sendeleistungswert von durch die Heimbasisstation transferierten Signalen gemäß einer Sendeleistung unter einem Streben danach eingestellt wird, dass man das schlechteste Signal-zu-Interferenz-plus-Rausch-Verhältnis eines durch die Heimbasisstation bedienten mobilen Endgeräts gleich folgendem hat:

$$SINR_{2F,CE} = \frac{1}{a^2(\phi+1)}\left(\frac{1}{\rho}-1\right)\frac{\eta+a}{\eta+1}$$

wobei p der Verminderungsfaktor ist.

6.  Verfahren nach Anspruch 5, **dadurch gekennzeichnet, dass** der maximale Sendeleistungswert von durch die Heimbasisstation transferierten Signalen unter einem Streben danach eingestellt wird, dass man das schlechteste Signal-zu-Interferenz-plus-Rausch-Verhältnis eines durch die Heimbasisstation bedienten mobilen Endgeräts gleich folgendem hat:

$$SINR_{F,CE} = \frac{1}{a^2(\phi+1)}\left(\frac{1}{\rho}-1\right)\frac{\eta+a}{\eta+1} + \frac{\sqrt{4a^2\phi(\phi+1)+\left(\frac{\eta+a}{\eta+1}\right)^2}-\frac{\eta+a}{\eta+1}}{2a^2(\phi+1)}.$$

7.  Verfahren nach Anspruch 1, **dadurch gekennzeichnet, dass** der maximale Sendeleistungswert von durch die Heimbasisstation transferierten Signalen unter Verwendung einer Tabelle eingestellt wird, wobei der erhaltene Leistungswert von durch die Basisstation transferierten empfangenen Funksignalen ein Eintrag der Tabelle ist, der einen maximalen Sendeleistungswert zur Verfügung stellt, der durch eine Funktion verschoben ist, die von dem Wanddurchdringungsfaktor und einem vorbestimmten Faktor abhängt.

8.  Verfahren nach Anspruch 1, **dadurch gekennzeichnet, dass** das Verfahren weiterhin die folgenden Schritte aufweist:

    - Erhalten des Leistungswerts von durch wenigstens eine weitere Basisstation und/oder eine weitere Heimbasisstation, die das wenigstens eine in der Umgebung der Heimbasisstation lokalisierte mobile Endgerät nicht bedient, transferierten empfangenen Funksignalen durch die Heimbasisstation,
    - Erhalten des Rauschpegels von wenigstens einem durch die Heimbasisstation bedienten mobilen Endgerät durch die Heimbasisstation,

    und dass der maximale Sendeleistungswert von durch die Heimbasisstation transferierten Signalen unter Verwendung einer Tabelle eingestellt wird, wobei die erhaltenen Leistungswerte von empfangenen Funksignalen, der Wanddurchdringungsfaktor des Gebäudes und der Rauschpegel Einträge der Tabelle sind.

9.  Verfahren nach Anspruch 1, **dadurch gekennzeichnet, dass** das Verfahren weiterhin die folgenden Schritte aufweist:

    - Erhalten des Leistungswerts von durch wenigstens eine weitere Basisstation und/oder eine weitere Heimbasisstation, die das wenigstens eine in der Umgebung der Heimbasisstation lokalisierte mobile Endgerät nicht bedient, transferierten empfangenen Funksignalen durch die Heimbasisstation,
- Erhalten des Rauschpegels von wenigstens einem durch die Heimbasisstation bedienten mobilen Endgerät durch die Heimbasisstation,

Erhalten des niedrigsten Pfadgewinns in dem Gebäude zwischen der Heimbasisstation und einem durch die Heimbasisstation bedienten mobilen Endgerät durch die Heimbasisstation,
und dass der maximale Sendeleistungswert von durch die Heimbasisstation transferierten Signalen unter Verwendung einer Tabelle eingestellt wird, wobei die erhaltenen Leistungswerte von empfangenen Funksignalen, der niedrigste Pfadgewinn, der Wanddurchdringungsfaktor des Gebäudes und der Rauschpegel Einträge der Tabelle sind.

**10.** Verfahren nach Anspruch 1, **dadurch gekennzeichnet, dass** das Verfahren weitere durch die Heimbasisstation ausgeführte Schritte aufweist:

- Transferieren einer Nachricht über die drahtlose Schnittstelle und Verwenden eines ersten Kommunikationsprotokolls, wobei Signale IN einem ersten Frequenzband transferiert werden, wobei die Nachricht wenigstens ein mobiles Endgerät auffordert, einige Messungen auf einem zweiten Frequenzband durchzuführen, auf welchem Signale eines zweiten Kommunikationsprotokolls transferiert werden,

Empfangen von durch das wenigstens eine mobile Endgerät durchgeführten Messungen über die drahtlose Schnittstelle und unter Verwendung des ersten Kommunikationsprotokolls,
Erhalten des niedrigsten Pfadgewinns in dem Gebäude zwischen der Heimbasisstation und einem durch die Heimbasisstation bedienten mobilen Endgerät und eines Wanddurchdringungsfaktors für das zweite Frequenzband,
Einstellen des maximalen Werts des Sendeleistungswerts der durch die Heimbasisstation transferierten Signale in dem zweiten Frequenzband gemäß den Messungen, dem Wanddurchdringungsfaktor und dem niedrigsten Pfadgewinn.

**11.** Verfahren nach Anspruch 1, **dadurch gekennzeichnet, dass** das Verfahren weitere durch die Heimbasisstation ausgeführte Schritte aufweist:

Transferieren einer Nachricht über die drahtlose Schnittstelle und Verwenden eines ersten Kommunikationsprotokolls, wobei Signale in einem ersten Frequenzband transferiert werden, wobei die Nachricht wenigstens ein mobiles Endgerät auffordert, einige Messungen auf dem ersten Frequenzbad durchzuführen,

- Empfangen von durch das wenigstens eine mobile Endgerät durchgeführten Messungen über die drahtlose Schnittstelle und unter Verwendung des ersten Kommunikationsprotokolls,
- Erhalten des niedrigsten Pfadgewinns in dem Gebäude zwischen der Heimbasisstation und einem durch die Heimbasisstation bedienten mobilen Endgerät und eines Wanddurchdringungsfaktors für das erste Frequenzband,
- Transponieren des niedrigsten Pfadgewinns in dem Gebäude zwischen der Heimbasisstation und dem durch die Heimbasisstation bedienten mobilen Endgerät und des Wanddurchdringungsfaktors in einem zweiten Frequenzband,
- Einstellen des maximalen Werts des Sendeleistungswerts der durch die Heimbasisstation transferierten Signale in dem zweiten Frequenzband gemäß den Messungen, dem transponierten Wanddurchdringungsfaktor und dem niedrigsten Pfadgewinn.

**12.** Vorrichtung zum Einstellen eines maximalen Werts einer Sendeleistung von durch eine Heimbasisstation über eine drahtlose Schnittstelle transferierten Signalen, wobei die Heimbasisstation in einem in der Zelle einer Basisstation lokalisierten Gebäude lokalisiert ist, **dadurch gekennzeichnet, dass** die Vorrichtung folgendes aufweist:

- eine Einrichtung zum Erhalten des Leistungswerts von durch die Basisstation, die wenigstens ein in der Umgebung der Heimbasisstation lokalisiertes mobiles Endgerät bedient, transferierten empfangenen Funksignalen,
- eine Einrichtung zum Einstellen des maximalen Werts des Sendeleistungswerts der durch die Heimbasisstation transferierten Signale gemäß dem erhaltenen Leistungswert von durch die Basisstation transferierten empfangenen Funksignalen unter Berücksichtigung eines Wanddurchdringungsfaktors des Gebäudes und zum Streben danach, das schlechteste Signal-zu-Interferenz-plus-Rausch-Verhältnis eines durch die Basisstation bedienten und in der Umgebung der Heimbasisstation lokalisierten mobilen Endgeräts gleich dem schlechtesten Signalzu-Interferenz-plus-Rausch-Verhältnis eines durch die Heimbasisstation bedienten mobilen Endgeräts zu machen.

**Revendications**

1. Procédé de réglage d'une valeur maximale d'une puissance d'émission de signaux transférés par une station de base domestique (HBS) à travers une interface sans fil, la station de base domestique étant située dans un bâtiment (HM) situé dans la cellule (CE1) d'une station de base (BS1), **caractérisé en ce que** le procédé comporte les étapes :

   - d'obtention (S400), par la station de base domestique (HBS), de la valeur de puissance des signaux radio reçus transférés par la station de base qui sert au moins un terminal mobile se trouvant dans le voisinage de la station de base domestique,
   - de réglage (S405), par la station de base domestique (HBS), de la valeur de puissance d'émission maximale des signaux transférés par la station de base domestique en fonction de la valeur de la puissance obtenue des signaux radio reçus transférés par la station de base en prenant en compte un facteur de pénétration de la paroi de l'immeuble et visant à rendre le pire rapport signal sur interférence plus bruit d'un terminal mobile servi par la station de base et situé à proximité de la station de base domestique égal au pire rapport signal sur interférence plus bruit d'un terminal mobile servi par la station de base domestique.

2. Procédé selon la revendication 1, **caractérisé en ce que** le procédé comporte en outre les étapes :

   - d'obtention (S401), par la station de base domestique, de la valeur de puissance des signaux radio reçus transférés par au moins une autre station de base et/ou d'une autre station de base domestique qui ne sert pas le au moins un terminal mobile se trouvant dans le voisinage de la station de base domestique,
   - d'obtention (S402), par la station de base domestique, du niveau de bruit d'au moins un terminal mobile servi par la station de base domestique, et **en ce que** la valeur de puissance de transmission maximale des signaux transférés par la station de base domestique est définie en fonction du niveau de bruit et de la valeur de puissance des signaux radio reçus transférés par au moins une autre station de base et/ou d'une autre station de base domestique qui ne sert pas le au moins un terminal mobile situé dans le voisinage de la station de base domestique.

3. Procédé selon la revendication 2, **caractérisé en ce que** la valeur de puissance de transmission maximale des signaux transférés par la station de base domestique est fixée en visant à avoir le pire rapport signal sur interférence plus bruit d'un terminal mobile servi par la station de base domestique égal à

$$SINR_{1F,CE} = \frac{\sqrt{4a^2\phi(\phi+1)+\left(\dfrac{\eta+a}{\eta+1}\right)^2}-\dfrac{\eta+a}{\eta+1}}{2a^2(\phi+1)}$$

où $\phi = P_{M,i} / (aP_i + N)$ est le rapport signal à interférence plus sur bruit pour un terminal mobile servi par la station de base et situé dans le bâtiment lorsque la station de base domestique HBS est arrêtée, $a$ est le facteur de pénétration de la paroi, $P_{M,i}$ est la valeur de la puissance des signaux transférés par la station de base et reçus par le terminal mobile, $P_i$ est la valeur de la puissance des signaux reçus transférés par une autre station de base et/ou une autre station de base domestique qui ne sert pas le au moins un terminal mobile et situé au voisinage de la station de base domestique, $N$ est le niveau de bruit au terminal mobile MT et $\eta = aP_i / N$.

4. Procédé selon la revendication 3, **caractérisé en ce que** la valeur de puissance de transmission maximale des signaux transférés par la station de base domestique est définie en fonction d'une puissance de transmission visant à avoir le plus mauvais rapport signal sur interférence plus bruit pour un terminal mobile servi par la station de base dégradée par un facteur de dégradation donné en comparaison à une transmission sans interférence de la station de base domestique.

5. Procédé selon la revendication 4, **caractérisé en ce que** la valeur de puissance de transmission maximale des signaux transférés par la station de base domestique est définie en fonction d'une puissance de transmission visant à avoir le plus mauvais rapport signal sur interférence plus bruit d'un terminal mobile servi par la station de base domestique égal à:

$$SINR_{2F,CE} = \frac{1}{a^2(\phi+1)} \left( \frac{1}{\rho} - 1 \right) \frac{\eta+a}{\eta+1}$$

où p est le facteur de dégradation.

**6.** Procédé selon la revendication 5, **caractérisé en ce que** la valeur de puissance de transmission maximale des signaux transférés par la station de base domestique est fixée en visant le pire rapport signal sur interférence plus bruit d'un terminal mobile servi par la station de base domestique égal à :

$$SINR_{F,CE} = \frac{1}{a^2(\phi+1)} \left( \frac{1}{\rho} - 1 \right) \frac{\eta+a}{\eta+1} + \frac{\sqrt{4a^2\phi(\phi+1) + \left(\frac{\eta+a}{\eta+1}\right)^2} - \frac{\eta+a}{\eta+1}}{2a^2(\phi+1)}$$

**7.** Procédé selon la revendication 1, **caractérisé en ce que** la valeur de puissance de transmission maximale des signaux transférés par la station de base domestique est définie à l'aide d'une table, la valeur de la puissance obtenue des signaux radio reçus transférés par la station de base étant une entrée de la table fournissant une valeur de puissance de transmission maximale qui est décalée par une fonction qui dépend du facteur de pénétration de la paroi et d'un facteur prédéterminé.

**8.** Procédé selon la revendication 1, **caractérisé en ce que** le procédé comporte en outre les étapes :

- d'obtention, par la station de base domestique, de la valeur de la puissance des signaux radio reçus transférés par au moins une autre station de base et/ou d'une autre station de base domestique qui ne sert pas au moins un terminal mobile se trouvant dans le voisinage de la station de base domestique,
- d'obtention, par la station de base domestique, du niveau de bruit d'au moins un terminal mobile servi par la station de base domestique, et **en ce que** la valeur de puissance de transmission maximale des signaux transférés par la station de base domestique est définie à l'aide d'une table, les valeurs des puissances obtenues des signaux radio reçus, le facteur de pénétration de la paroi de l'immeuble et le niveau de bruit étant les entrées de la table.

**9.** Procédé selon la revendication 1, **caractérisé en ce que** le procédé comporte en outre les étapes:

- d'obtention, par la station de base domestique, de la valeur de la puissance des signaux radio reçus transférés par au moins une autre station de base et-/-ou d'une autre station de base domestique qui ne sert pas au moins un terminal mobile se trouvant dans le voisinage de la station de base domestique,
- d'obtention, par la station de base domestique, du niveau de bruit d'au moins un terminal mobile servi par la station de base domestique,
- d'obtention, par la station de base domestique, du plus petit gain de trajet dans le bâtiment entre la station de base domestique et un terminal mobile servi par la station de base domestique,

et **en ce que** la valeur de puissance de transmission maximale des signaux transférés par la station de base domestique est définie à l'aide d'une table, les valeurs de puissance obtenues des signaux radio reçus, le gain du trajet le plus petit, le facteur de pénétration de la paroi de l'immeuble et le niveau de bruit étant les entrées de la table.

**10.** Procédé selon la revendication 1, **caractérisé en ce que** le procédé comporte en outre les étapes, exécutées par la station de base domestique:

- de transfert d'un message par l'interface sans fil et en utilisant un premier protocole de communication dans lequel des signaux sont transférés dans une première bande de fréquences, le message demandant à au moins un terminal mobile d'effectuer des mesures sur une deuxième bande de fréquence sur laquelle des signaux d'un deuxième protocole d'communication sont transférés,

- de réception, par l'interface sans fil et utilisant le premier protocole de communication, des mesures effectuées par le au moins un terminal mobile,

- d'obtention pour la seconde bande de fréquences, du gain de trajet le plus petit dans le bâtiment entre la station de base domestique et un terminal mobile servi par la station de base domestique et d'un facteur de pénétration de la paroi,

- de réglage de la valeur maximale de la valeur de puissance de transmission des signaux transférés par la station de base domestique dans la deuxième bande de fréquences en fonction des mesures, du facteur de pénétration de la paroi et du plus petit gain de trajet.

**11.** Procédé selon la revendication 1, **caractérisé en ce que** le procédé comporte en outre les étapes, exécutées par la station de base domestique:

- de transfert d'un message par l'interface sans fil et en utilisant un premier protocole de communication dans lequel des signaux sont transférés dans une première bande de fréquences, le message demandant à au moins un terminal mobile d'effectuer des mesures sur la première bande de fréquences,

- de réception, par l'interface sans fil et en utilisant le premier protocole de communication, des mesures effectuées par le au moins un terminal mobile,

- d'obtention pour la première bande de fréquences, du gain de trajet le plus petit dans le bâtiment entre la station de base domestique et un terminal mobile servi par la station de base domestique et d'un facteur de pénétration de la paroi,

- de transposition dans une seconde bande de fréquences, du gain de trajet le plus petit dans le bâtiment entre la station de base domestique et le terminal mobile servi par la station de base domestique et le facteur de pénétration de la paroi,

- de réglage de la valeur maximale de la valeur de puissance de transmission des signaux transférés par la station de base domestique dans la deuxième bande de fréquences en fonction des mesures, de la transposition du facteur de pénétration de la paroi et du plus petit gain de trajet.

**12.** Dispositif de réglage d'une valeur maximale d'une puissance d'émission de signaux transférés par une station de base domestique à travers une interface sans fil, la station de base domestique étant située dans un bâtiment situé dans la cellule d'une station de base, **caractérisé en ce que** le dispositif comporte :

- des moyens d'obtention, par la station de base domestique, de la valeur de puissance des signaux radio reçus transférés par la station de base qui sert au moins un terminal mobile se trouvant dans le voisinage de la station de base domestique,

- des moyens de réglage, par la station de base domestique, de la valeur de puissance d'émission maximale des signaux transférés par la station de base domestique en fonction de la valeur de la puissance obtenue des signaux radio reçus transférés par la station de base en prenant en compte un facteur de pénétration de la paroi de l'immeuble et visant à rendre le pire rapport signal sur interférence plus bruit d'un terminal mobile servi par la station de base et situé à proximité de la station de base domestique égal au pire rapport signal sur interférence plus bruit d'un terminal mobile desservi par la station de base domestique.

CE1

BS1

HBS

HM

MT1

MT2

Server

Serv

BS2

Fig. 1

HBS

200 — Processor · Network I/F — 206

203 — RAM · Wireless I/F — 205

201

202 — ROM

Fig. 2

Serv

300 — Processor · Network I/F — 306

303 — RAM

301

302 — ROM

Fig. 3

Fig. 4

Fig. 5

S600 — Obtain table

S601 — Obtain $P_{MI}$, $P_i$, $a$, $N$

S602 — Determine $P_{F,CE}$ using table

S603 — Evaluate $G$

S604 — Determine $P_t$

S605 — Apply $P_t$

Fig. 6

S700 — Obtain table

S701 — Obtain $P_{MI}$, $P_i$, $a$, $N$, $G$

S702 — Determine $P_t$ using table

S703 — Apply $P_t$

Fig. 7

S800 — Request MT to perform measurement on second frequency band

S801 — Receive measurements

S802 — Determine $a$, $G$

S803 — Determine $P_t$ using $a$, $G$

S804 — Apply $P_t$ on second frequency band

## Fig. 8

S900 — Request MT to perform measurement on first frequency band

S901 — Receive measurements

S902 — Determine $a$, $G$ for first Frequency band

S903 — Modify $a$, $G$ for second Frequency band

S904 — Determine $P_t$ for second Frequency band using modified $a$, $G$

S905 — Apply $P_t$ on second frequency band

## Fig. 9

**EP 2 487 966 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009042593 A

**Non-patent literature cited in the description**

- **HOLGER C.** Performance of macro an co-channel femtocells in hierarchical cell structure. *IEEE PIMRC'07,* 2007